# EUROPEAN PATENT APPLICATION

(11) **EP 3 633 600 A1**
(43) Date of publication of application: **08.04.2020**
(21) Application number: 18809315.7
(22) Date of filing: 29.05.2018
(51) Int. Cl.: G06T 5/00, G06T 5/50

(54) **METHOD AND APPARATUS FOR DENOISING PROCESSING, STORAGE MEDIUM AND TERMINAL**

(30) Priority: 31.05.2017 CN 201710401745
(71) Applicant: GUANGDONG OPPO MOBILE TELECOMMUNICATIONS CORP., LTD., Wusha, Chang'an Dongguan, Guangdong 523860 (CN)
(72) Inventor: ZHUO, Shijie, Dongguan Guangdong 523860 (CN); LI, Xiaopeng, Dongguan Guangdong 523860 (CN)
(74) Representative: Mewburn Ellis LLP
(86) International application number: PCT/CN2018/088865
(87) International publication number: WO 2018/219274

(57) **Abstract**

A method and device for denoising processing, a storage medium, and a terminal are provided. The method includes the following. A to-be-processed picture and a reference picture are obtained from multiple pictures taken continuously. A displacement of a terminal generated within a period in which the to-be-processed picture and the reference picture are taken is obtained. According to the displacement, reference pixel points of the reference picture each corresponding to one of to-be-processed pixel points of the to-be-processed picture are determined. According to a pixel value of each of the reference pixel points, a pixel value of a corresponding to-be-processed pixel point is adjusted.

## Description

### CROSS-REFERENCE TO RELATED APPLICATION(S)

This application claims priority to Chinese Patent Application Serial No. 201710401745.2, filed on May 31, 2017, entitled " METHOD AND DEVICE FOR DENOISING PROCESSING, STORAGE MEDIUM, AND TERMINAL", the entire disclosures of which are hereby incorporated by reference.

### TECHNICAL FIELD

This disclosure relates to the technical field of image processing, and particularly to a method and device for denoising processing, a storage medium, and a terminal.

### BACKGROUND

At present, a photographing function of mobile terminals such as smart phones and the like is increasingly improved. The mobile terminals can be carried around, and whenever and wherever the mobile terminals can be used to perform photographing, thereby facilitating people's daily life.

However, when the mobile terminal performs photographing in low light, there is noise in a picture taken, that is, there are unexpected pixel points in the picture. The noise can lower the quality of the picture.

### SUMMARY

Implementations of the present disclosure provide a method and device for denoising processing, a storage medium, and a terminal, which can improve quality of pictures.

According to a first aspect, the implementations of the present disclosure provide a method for denoising processing. The method includes the following. A to-be-processed picture and a reference picture are obtained from multiple pictures taken continuously. A displacement of a terminal generated within a period in which the to-be-processed picture and the reference picture are taken is obtained. According to the displacement, reference pixel points of the reference picture each corresponding to one of to-be-processed pixel points of the to-be-processed picture are determined. According to a pixel value of each of the reference pixel points, a pixel value of a corresponding to-be-processed pixel point is adjusted.

According to a second aspect, the implementations of the present disclosure further provide a device for denoising processing. The device includes a first obtaining module, a second obtaining module, a determining module, and an adjusting module. The first obtaining module is configured to obtain a to-be-processed picture and a reference picture from multiple pictures taken continuously. The second obtaining module is configured to obtain a displacement of a terminal generated within a period in which the to-be-processed picture and the reference picture are taken. The determining module is configured to determine, according to the displacement, reference pixel points of the reference picture each corresponding to one of to-be-processed pixel points of the to-be-processed picture. The adjusting module is configured to adjust, according to a pixel value of each of the reference pixel points, a pixel value of a corresponding to-be-processed pixel point.

According to a third aspect, the implementations of the present disclosure further provide a storage medium. The storage medium stores a number of instructions. The instructions are invoked by a processor to perform the method for denoising processing described above.

According to a fourth aspect, the implementations of the present disclosure further provide a terminal. The terminal includes a processor, a camera, and a control circuit. The processor is electrically coupled to the camera and the control circuit. The control circuit is configured to control the camera to take photos. The processor is configured to perform the following. A to-be-processed picture and a reference picture are obtained from multiple pictures taken continuously. A displacement of the terminal generated within a period in which the to-be-processed picture and the reference picture are taken is obtained. According to the displacement, reference pixel points of the reference picture each corresponding to one of to-be-processed pixel points of the to-be-processed picture are determined. According to a pixel value of each of the reference pixel points, a pixel value of a corresponding to-be-processed pixel point is adjusted.

### BRIEF DESCRIPTION OF THE DRAWINGS

To describe technical solutions of implementations of the present disclosure more clearly, the following will give a brief description of accompanying drawings used for describing the implementations of the present disclosure. Apparently, the accompanying drawings described in the following merely illustrate some implementations of the present disclosure. Those of ordinary skill in the art can also obtain other accompanying drawings based on the accompanying drawings without creative efforts.
FIG. 1 is a schematic flow chart illustrating a method for denoising processing according to a first implementation of the present disclosure.
FIG. 2 is a schematic flow chart illustrating a method for denoising processing according to a second implementation of the present disclosure.
FIG. 3 is a schematic flow charting illustrating a method for denoising processing according to a third implementation of the present disclosure.
FIG. 4 is a schematic diagram illustrating an application scenario of a method for denoising processing according to a first implementation of the present disclosure.
FIG. 5 is a schematic diagram illustrating an application scenario of a method for denoising processing according to a second implementation of the present disclosure.
FIG. 6 is a schematic structural diagram illustrating a device for denoising processing according to a first implementation of the present disclosure.
FIG. 7 is a schematic structural diagram illustrating a device for denoising processing according to a second implementation of the present disclosure.
FIG. 8 is a schematic structural diagram illustrating a device for denoising processing according to a third implementation of the present disclosure.
FIG. 9 is a schematic structural diagram illustrating a device for denoising processing according to a fourth implementation of the present disclosure.
FIG. 10 is a schematic structural diagram illustrating a device for denoising processing according to a fifth implementation of the present disclosure.
FIG. 11 is a schematic structural diagram illustrating a terminal according to an implementation of the present disclosure.

### DETAILED DESCRIPTION

The technical solutions embodied in implementations of the present disclosure will be described in a clear and comprehensive manner in conjunction with the accompanying drawings used for describing the implementations of the present disclosure. It is apparent that the implementations described herein are merely some of rather than all the implementations of the present disclosure. Based on the implementations of the present disclosure, all other implementations obtained by those of ordinary skill in the art without creative efforts shall fall within the protection scope of the present disclosure.

The terms "first", "second", "third" and the like (if they exist) used in the specification, the claims, and the accompany drawings of the present disclosure are used to distinguish different objects rather than describe a particular order or a sequential order. It is to be understood that the objects described in such a way may be interchangeable in a proper condition. In addition, the terms "include", "comprise", and "have" as well as variations thereof are intended to cover non-exclusive inclusion. For example, a process or a method including a series of steps is not limited to the listed steps, on the contrary, other steps that are not listed can be included. Or, a device, a terminal or a system including a series of modules or units is not limited to the listed modules or units, on the contrary, other modules or units that are not listed can be included. Alternatively, other steps inherent to the process or method can be included either, or other units inherent to the device, terminal, or system can be included either.

Implementations of the present disclosure provide a method for denoising processing. The method includes the following. A to-be-processed picture and a reference picture are obtained from multiple pictures taken continuously. A displacement of a terminal generated within a period in which the to-be-processed picture and the reference picture are taken is obtained. According to the displacement, reference pixel points of the reference picture each corresponding to one of to-be-processed pixel points of the to-be-processed picture are determined. According to a pixel value of each of the reference pixel points, a pixel value of a corresponding to-be-processed pixel point is adjusted.

In some implementations, the terminal includes an angular velocity sensor. The displacement of the terminal generated within the period in which the to-be-processed picture and the reference picture are taken is obtained as follows. Angular displacement data of the angular velocity sensor is obtained. The angular displacement data is determined as the displacement of the terminal.

In some implementations, the terminal includes an acceleration sensor. The displacement of the terminal generated within the period in which the to-be-processed picture and the reference picture are taken is obtained as follows. Displacement data of the acceleration sensor is obtained. The displacement data is determined as the displacement of the terminal.

In some implementations, according to the displacement, the reference pixel points of the reference picture each corresponding to one of the to-be-processed pixel points of the to-be-processed picture are determined as follows. According to the displacement, a horizontal sub-displacement and a vertical sub-displacement of an imaging plane of photographing performed by the terminal are determined. According to the horizontal sub-displacement and the vertical sub-displacement, the reference pixel points of the reference picture each corresponding to one of the to-be-processed pixel points of the to-be-processed picture are determined.

In some implementations, according to the horizontal sub-displacement and the vertical sub-displacement, the reference pixel points of the reference picture each corresponding to one of the to-be-processed pixel points of the to-be-processed picture are determined as follows. According to the horizontal sub-displacement and the vertical sub-displacement, a horizontal pixel point offset value and a vertical pixel point offset value of each of the to-be-processed pixel points of the to-be-processed picture are determined. According to the horizontal pixel point offset value and the vertical pixel point offset value of each of the to-be-processed pixel points, the reference pixel points of the reference picture each corresponding to one of the to-be-processed pixel points of the to-be-processed picture are determined.

In some implementations, according to a pixel value of each of the reference pixel points, a pixel value of a corresponding to-be-processed pixel point is adjusted as follows. A target pixel value is calculated according to a pixel value of each of the to-be-processed pixel point, a pixel value of a corresponding reference pixel point, a predetermined weight for the each of the to-be-processed pixel points, and the predetermined weight for the corresponding reference pixel point. The pixel value of the each of the to-be-processed pixel points is changed to the target pixel value.

In some implementations, according to the pixel value of the each of the to-be-processed pixel points, the pixel value of the corresponding reference pixel point, the predetermined weight for the each of the to-be-processed pixel points, and the predetermined weight for the corresponding reference pixel point, the target pixel value is calculated as follows. An average pixel value of the pixel value of the each of the to-be-processed pixel points and the pixel value of the corresponding reference pixel point is calculated. The average pixel value is determined as the target pixel value.

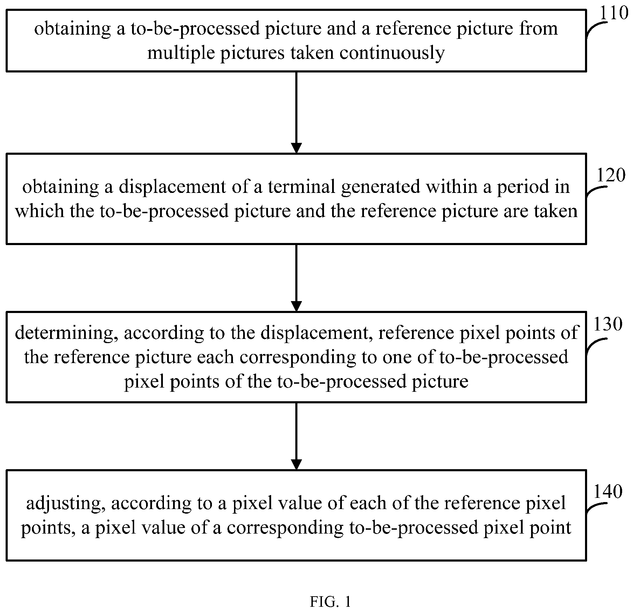

A method for denoising processing is provided according to an implementation of the present disclosure. The method can be applied to a terminal. The terminal may be a smart phone, a tablet computer, or the like. As illustrated in FIG. 1, the method for denoising processing includes the following.

At block 110, a to-be-processed picture and a reference picture are obtained from multiple pictures taken continuously.

The terminal includes a camera. The terminal can perform photographing via the camera. When the terminal performs photographing, to obtain a picture having high quality, the terminal can control the camera to quickly and continuously take multiple pictures. For example, when the terminal performs photographing, the terminal controls the camera to quickly and continuously take four pictures *A*, *A1*, *A2*, and *A3* within one second. In actual application, after multiple pictures are obtained by shooting the same scene, the multiple pictures can be processed to obtain a picture having highest quality.

After multiple pictures are taken continuously, the terminal can analyze and compare the multiple pictures to select, from the multiple pictures, a picture having highest sharpness as the to-be-processed picture. For example, among the four pictures *A*, *A1*, *A2*, and *A3*, the sharpness of the picture *A* is highest, and thus the picture *A* can be selected as the to-be-processed picture. Thereafter, the reference picture is selected from multiple pictures excluding the to-be-processed picture. For example, a picture having highest sharpness among the multiple pictures excluding the to-be-processed picture can be selected as the reference picture.

In some examples, the reference picture may be a picture adjacent to the to-be-processed picture, where the picture being adjacent to the to-be-processed picture means that the picture is taken before or after the to-be-processed picture in a photographing sequence. For example, among the four pictures *A*, *A1*, *A2*, and *A3*, if the picture *A* is the to-be-processed picture, then the picture *A1* can be selected as the reference picture.

The terminal can process the to-be-processed picture according to the reference picture after obtaining the to-be-processed picture and the reference picture from the multiple pictures.

What needs to be illustrated is that during picture processing, the terminal can process the to-be-processed picture more than once. That is, the terminal can obtain the reference picture, and after the terminal performs a processing on the to-be-processed picture, the terminal can further obtain a next reference picture and perform another processing on the to-be-processed picture. For example, among the four pictures *A*, *A1*, *A2*, and *A3*, if the picture *A* is the to-be-processed picture, the terminal can perform a first processing on the picture *A* by taking the picture *A1* as the reference picture, and then the terminal can further perform a second processing on the picture *A* by taking the picture *A2* as the reference picture.

At block 120, the terminal obtains a displacement of the terminal generated within a period in which the to-be-processed picture and the reference picture are taken.

In actual application, when the terminal is used to perform photographing, a shaking of the terminal may inevitably occur. Accordingly, when the terminal performs continuous photographing, the terminal may change in position and posture. Even if a time interval in which two pictures are taken is short, a small displacement of the terminal may be generated. The displacement may include a displacement generated by a parallel movement of the terminal, and also may include an angular displacement generated by a rotation of the terminal.

After the terminal obtains the to-be-processed picture and the reference picture, the terminal can obtain the displacement of the terminal generated within the period in which the to-be-processed picture and the reference picture are taken.

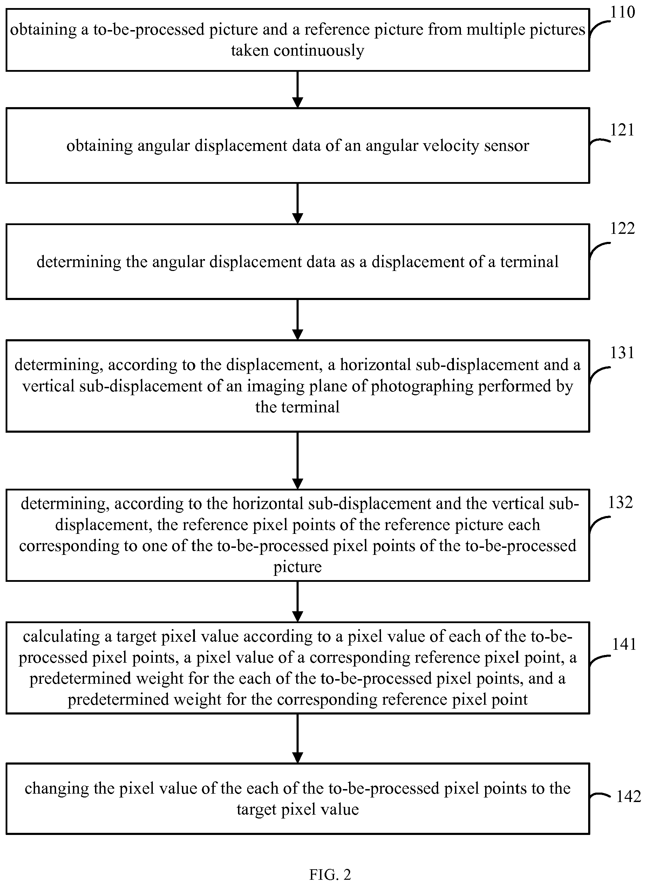

In some examples, the terminal includes an angular speed sensor (also referred to as a Gyro-sensor). The angular speed sensor can be configured to measure an angular displacement. As illustrated in FIG. 2, the displacement of the terminal generated within the period in which the to-be-processed picture and the reference picture are taken as follows. 121, angular displacement data of the angular speed sensor is obtained. 122, the angular displacement data is determined as the displacement of the terminal.

The terminal can record a time point at which the to-be-processed picture is taken and a time point at which the reference picture is taken, obtain angular displacement data of the angular speed sensor generated between the two time points, and determine the angular displacement data as the displacement of the terminal.

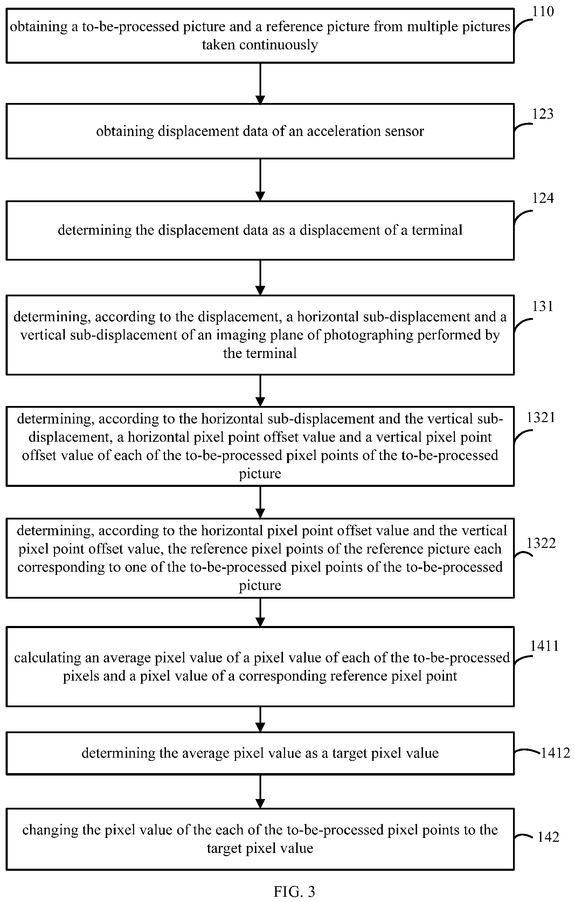

In some examples, the terminal includes an acceleration sensor (also referred to as a gravity sensor). The acceleration sensor can be used to measure a displacement. As illustrated in FIG. 3, the displacement of the terminal generated within the period in which the to-be-processed picture and the reference picture are obtained as follows. 123, displacement data of the acceleration sensor is obtained. 124, the displacement data is determined as the displacement of the terminal.

The terminal can record the time point at which the to-be-processed picture is taken and the time point at which the reference picture is taken, obtain the displacement data of the acceleration sensor generated between the two time points, and determine the displacement data as the displacement of the terminal.

In some examples, the terminal can obtain, via the angular speed sensor and the acceleration sensor, the displacement of the terminal generated within the period in which the to-be-processed picture and the reference picture are taken.

At block 130, the terminal determines, according to the displacement, reference pixel points of the reference picture each corresponding to one of to-be-processed pixel points of the to-be-processed picture.

When the terminal performs a processing on the to-be-processed picture, pixel points of the to-be-processed picture are processed sequentially. The pixel points of the to-be-processed picture are the to-be-processed pixel points. Pixel points of the reference picture are the reference pixel points.

During performing photographing, if a displacement of the terminal is generated, a position of a part of a captured object (or a scenery) in the to-be-processed picture is different from that of the part of the captured object in the reference picture.

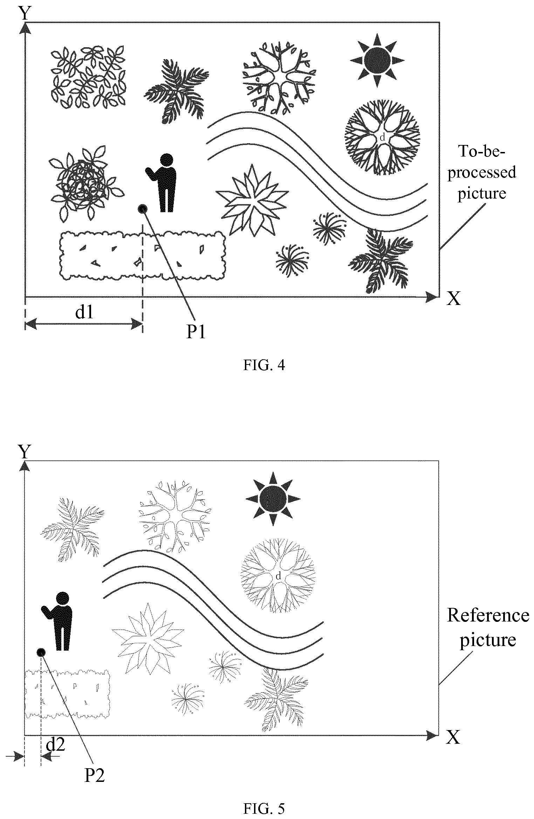

Referring to FIG. 4 and FIG. 5, FIG. 4 illustrates the to-be-processed picture, and FIG. 5 illustrates the reference picture. A pixel point *P1* of the picture in FIG. 4 and a pixel point *P2* of the picture in FIG. 5 are indicative of the same part of the captured object. That is, the pixel point *P1* of the to-be-processed picture corresponds to the pixel point *P2* of the reference picture. In the to-be-processed picture, a distance between the pixel point *P1* and the left edge is *d1*. In the reference picture, a distance between the pixel point *P2* and the left edge is d2. Since a displacement of the terminal is generated during photographing, *d1* is different from *d2.*

After the terminal obtains the displacement of the terminal generated within the period in which the to-be-processed picture and the reference picture are taken, the terminal determines, according to the displacement, the reference points of the reference picture each corresponding to one of the to-be-processed pixels of the to-be-processed picture. As illustrated in FIG. 4 and FIG. 5, the pixel point *P1* of the to-be-processed picture is one to-be-processed pixel point, and the pixel point *P2* of the reference picture that corresponds to the to-be-processed pixel *PI* is one reference pixel point.

In some examples, as illustrated in FIG. 2, according to the displacement, the reference pixel points of the reference picture each corresponding to one of the to-be-processed pixels of the to-be-processed picture are determined as follows. 131, a horizontal sub-displacement and a vertical sub-displacement of an imaging plane of photographing performed by the terminal is determined according to the displacement. 132, according to the horizontal sub-displacement and the vertical sub-displacement, the reference pixel points of the reference picture each corresponding to one of the to-be-processed pixel points of the to-be-processed picture are determined.

After the terminal determines the displacement generated during photographing, the terminal can determine, according to the displacement, the horizontal sub-displacement and the vertical sub-displacement of the imaging plane of photographing performed by the terminal. The imaging plane of photographing performed by the terminal refers to an imaging plane of taking the reference picture. Referring to FIG. 4 and FIG. 5, the horizontal sub-displacement can be understood to be a displacement along an X axis of the picture, and the vertical sub-displacement can be understood to be a displacement along a Y axis of the picture.

The horizontal sub-displacement and the vertical sub-displacement are displacements of the imaging plane of photographing performed by the terminal, and also a horizontal sub-displacement and a vertical sub-displacement of each pixel point of the reference picture relative to a corresponding pixel point of the to-be-processed picture, respectively. After the terminal determines the horizontal sub-displacement and the vertical sub-displacement, the terminal can determine, according to the horizontal sub-displacement and the vertical sub-displacement, the reference pixel points of the reference picture each corresponding to one of the to-be-processed pixel points of the to-be-processed picture.

In some examples, as illustrated in FIG. 3, according to the horizontal sub-displacement and the vertical sub-displacement, the reference pixel points of the reference picture each corresponding to one of the to-be-processed pixel points of the to-be-processed picture can be determined as follows. 1321, according to the horizontal sub-displacement and the vertical sub-displacement, a horizontal pixel point offset value and a vertical pixel point offset value of each to-be-processed pixel point of the to-be-processed picture can be determined. 1322, according to the horizontal pixel point offset value and the vertical pixel point offset value, the reference pixel points of the reference picture each corresponding to one of the to-be-processed pixel points can be determined.

The camera of the terminal has a fixed specification, that is, a distance between two adjacent and smallest sensing units of the camera (pixel points of the camera) is fixed. For example, two adjacent pixel points of the camera is 0.1 µm.

After the terminal obtains the horizontal sub-displacement and the vertical sub-displacement, according to the horizontal sub-displacement and the vertical sub-displacement, the terminal calculates the horizontal pixel point offset value and the vertical pixel point offset value of each to-be-processed pixel point of the to-be-processed picture. For example, if the horizontal sub-displacement is 5µm and the vertical sub-displacement is 2µm, it can be determined that during photographing, the horizontal pixel point offset value and the vertical pixel point offset value of each to-be-processed pixel point of the to-be-processed picture are respectively 50 pixel points and 20 pixel points.

Thereafter, the terminal determines, according to the horizontal pixel point offset value and the vertical pixel point offset value of each to-be-processed pixel point, the reference pixel points of the reference picture each corresponding to one of the to-be-processed pixel points of the to-be-processed picture. For example, a reference pixel point corresponding to a to-be-processed pixel point of the to-be-processed picture can be obtained by horizontally moving 50 pixel points from the to-be-processed pixel point and then vertically moving 20 pixel points.

At block 140, a pixel value of a corresponding to-be-processed pixel point is adjusted according to a pixel value of each of the reference pixel points.

After the terminal determines the reference pixel points of the reference picture each corresponding to one of the to-be-processed pixel points of the to-be-processed picture, the terminal adjusts a pixel value of a corresponding to-be-processed pixel point according to a pixel value of each of the reference pixel points, so as to reduce noise in the to-be-processed picture.

In some examples, as illustrated in FIG. 2, according to a pixel value of each of the reference pixel points, the terminal adjusts a pixel value of a corresponding to-be-processed pixel point as follows. 141, a target pixel value is determined according to a pixel value of each of the to-be-processed pixel points, a pixel value of a corresponding reference pixel point, a predetermined weight for the each of the to-be-processed pixel points, and a predetermined weight for the corresponding reference pixel point. 142, the pixel value of the each of the to-be-processed pixel points is changed to the target pixel value.

The terminal can calculate the target pixel value according to the pixel value of the each of the to-be-processed pixel points, the pixel value of the corresponding reference pixel point, the predetermined weight for the each of the to-be-processed pixel points, and the predetermined weight for the corresponding reference pixel point. For example, if the pixel value of the each of the to-be-processed pixel points is 120, the pixel value of the corresponding reference pixel point is 100, the predetermined weight for the each of the to-be-processed pixel points is 0.7, and the predetermined weight for the corresponding reference pixel point is 0.3, it can be calculated that the target pixel value W is 114 via an equation W=120×0.7+100×0.3. Thereafter, the pixel value of the each of the to-be-processed pixel points is changed to the target pixel value.

In some examples, as illustrated in FIG. 3, according to the pixel value of the each of the to-be-processed pixel points, the pixel value of the corresponding reference pixel point, the predetermined weight for the each of the to-be-processed pixel points, and the predetermined weight for the corresponding reference pixel point, the terminal determines the target pixel value as follows. 141, an average pixel value of the pixel value of the each of the to-be-processed pixel points and the pixel value of the corresponding reference pixel point is calculated. 1412, the average pixel value is determined as the target pixel value.

The predetermined weight for the each of the to-be-processed pixel points and the predetermined weight for the corresponding reference pixel point are both 0.5. The terminal calculates the average pixel value of the pixel value of the each of the to-be-processed pixel points and the pixel value of the corresponding reference pixel point, and then determines the average pixel value as the target pixel value. For example, if the pixel value of the each of the to-be-processed pixel points is 120, and the pixel value of the corresponding reference pixel point is 100, then it can be calculated that the average pixel value is 110, and then the target pixel value is determined to be 110.

In detailed implementations, there is no limitation on the described execution sequence of various operations, and certain operations may be executed in other sequences or simultaneously without conflict.

Based on the above, it can be concluded that for the method for denoising processing provided in the implementation of the present disclosure, the to-be-processed picture and the reference picture are obtained from multiple pictures continuously taken. The displacement of the terminal generated within the period in which the to-be-processed picture and the reference picture are taken is obtained. According to the displacement, the reference pixel points of the reference picture each corresponding to one of the to-be-processed pixel points of the to-be-processed picture are determined. According to a pixel value of each of the reference pixel points, a pixel value of a corresponding to-be-processed pixel points is adjusted. In the solution, according to the displacement of the terminal generated during photographing of the terminal, the reference pixel points each corresponding to one of the to-be-processed pixel points of the to-be-processed picture are determined. Thereafter, the pixel values of the to-be-processed pixel points are adjusted according to the pixel values of the reference pixel points. Thus, noise in the picture can be reduced, and accordingly the quality of the picture is improved.

Implementations of the present disclosure further provides a device for denoising processing. The device includes a first obtaining module, a second obtaining module, a determining module, and an adjusting module. The first obtaining module is configured to obtain a to-be-processed picture and a reference picture from a plurality of pictures taken continuously. The second obtaining module is configured to obtain a displacement of a terminal generated within a period in which the to-be-processed picture and the reference picture are taken. The determining module is configured to determine, according to the displacement, reference pixel points of the reference picture each corresponding to one of to-be-processed pixel points of the to-be-processed picture. The adjusting module is configured to adjust, according to a pixel value of each of the reference pixel points, a pixel value of a corresponding to-be-processed pixel points.

In some examples, the terminal includes an angular speed sensor. The second obtaining module includes a first obtaining sub-module and a first determining sub-module. The first obtaining sub-module is configured to obtain angular displacement data of the angular velocity sensor. The first determining sub-module is configured to determine the angular displacement data as the displacement of the terminal.

In some examples, the terminal includes an acceleration sensor. The second obtaining module includes a second obtaining sub-module and a second determining sub-module. The second obtaining sub-module is configured to obtain displacement data of the acceleration sensor. The second determining sub-module is configured to determine the displacement data as the displacement of the terminal.

In some examples, the determining module includes a third determining sub-module and a fourth determining sub-module. The third determining sub-module is configured to determine, according to the displacement, a horizontal sub-displacement and a vertical sub-displacement of an imaging plane of photographing performed by the terminal. The fourth determining sub-module is configured to determine, according to the horizontal sub-displacement and the vertical sub-displacement, the reference pixel points of the reference picture each corresponding to one of the to-be-processed pixel points of the to-be-processed picture.

In some examples, the fourth determining sub-module is configured to determine, according to the horizontal sub-displacement and the vertical sub-displacement, a horizontal pixel point offset value and a vertical pixel point offset value of each of the to-be-processed pixel points of the to-be-processed picture, and determine, according to the horizontal pixel point offset value and the vertical pixel point offset value, the reference pixel points of the reference picture each corresponding to one of the to-be-processed pixel points of the to-be-processed picture.

In some examples, the adjusting module includes a calculating sub-module and a changing sub-module. The calculating sub-module is configured to determine a target pixel value according to a pixel value of each of the to-be-processed pixel points, a pixel value of a corresponding reference pixel point, a predetermined weight for the each of the to-be-processed pixel points, and a predetermined weight for the corresponding reference pixel point. The changing sub-module is configured to change the pixel value of the each of the to-be-processed pixel points to the target pixel value.

In some examples, the calculating sub-module is configured to calculate an average pixel value of the pixel value of the each of the to-be-processed pixels and the pixel value of the corresponding reference pixel point, and determine the average pixel value as the target pixel value.

Implementations of the present disclosure further provides a device for denoising processing. The device can be integrated in a terminal. The terminal may be a smart phone, a tablet computer, or the like.

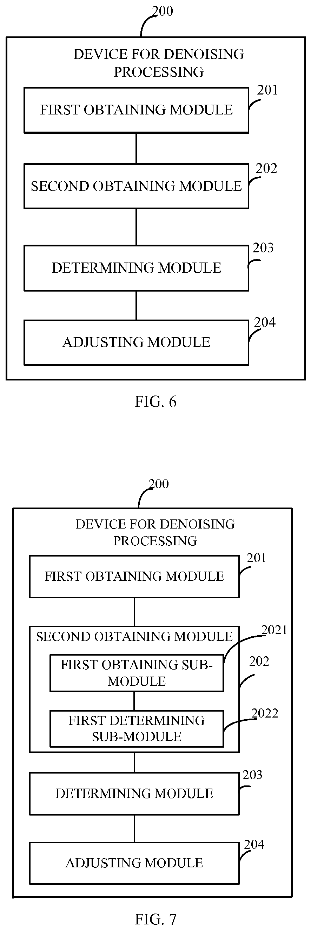

As illustrated in FIG. 6, a device 200 for denoising processing may include a first obtaining module 201, a second obtaining module 202, a determining module 203, and an adjusting module 204.

The first obtaining module 201 is configured to obtain a to-be-processed picture and a reference picture from multiple pictures taken continuously.

The terminal includes a camera. The terminal can perform photographing via the camera. When the terminal performs photographing, to obtain a picture having high quality, the terminal can control the camera to quickly and continuously take multiple pictures. For example, when the terminal performs photographing, the terminal controls the camera to quickly and continuously take four pictures *A*, *A1*, *A2*, and *A3* within one second. In actual application, after multiple pictures are obtained by shooting the same scene, the multiple pictures can be processed to obtain a picture having highest quality.

After multiple pictures are taken continuously, the first obtaining module 201 can analyze and compare the multiple pictures to select, from the multiple pictures, a picture having highest sharpness as the to-be-processed picture. For example, among the four pictures *A*, *A1*, *A2*, and *A3*, the sharpness of the picture *A* is highest, and thus the picture A can be selected as the to-be-processed picture. Thereafter, the reference picture is selected from multiple pictures excluding the to-be-processed picture. For example, a picture having highest sharpness among the multiple pictures excluding the to-be-processed picture can be selected as the reference picture.

In some examples, the reference picture may be a picture adjacent to the to-be-processed picture, where the picture being adjacent to the to-be-processed picture means that the picture is taken before or after the to-be-processed picture in a photographing sequence. For example, among the four pictures *A*, *A1*, *A2*, and *A3*, if the picture *A* is the to-be-processed picture, then the picture *A1* can be selected as the reference picture.

The device 200 for denoising process can process the to-be-processed picture according to the reference picture after the first obtaining module 201 obtains the to-be-processed picture and the reference picture from the multiple pictures.

What needs to be illustrated is that during picture processing, the device 200 for denoising process can process the to-be-processed picture more than once. That is, the first obtaining module 201 can obtain the reference picture, and after the device 200 for denoising process performs a processing on the to-be-processed picture, the first obtaining module 201 can further obtain a next reference picture, and the device 200 for denoising process performs another processing on the to-be-processed picture. For example, among the four pictures *A*, *A1*, *A*2, and *A*3, if the picture *A* is the to-be-processed picture, the terminal can perform a first processing on the picture *A* by taking the picture *A1* as the reference picture, and then the terminal can further perform a second processing on the picture *A* by taking the picture *A2* as the reference picture.

The second obtaining module 202 is configured to obtain a displacement of the terminal generated within a period in which the to-be-processed picture and the reference picture are taken.

In actual application, when the terminal is used to perform photographing, a shaking of the terminal may inevitably occur. Accordingly, when the terminal performs continuous photographing, the terminal may change in position and posture. Even if a time interval in which two pictures are taken is short, a small displacement of the terminal may be generated. The displacement may include a displacement generated by a parallel movement of the terminal, and also may include an angular displacement generated by a rotation of the terminal.

After the first obtaining module 201 obtains the to-be-processed picture and the reference picture, the second obtaining module 202 can obtain the displacement of the terminal generated within the period in which the to-be-processed picture and the reference picture are taken.

In some examples, the terminal includes an angular speed sensor (also referred to as a Gyro-sensor). The angular speed sensor can be configured to measure an angular displacement. As illustrated in FIG. 7, the second obtaining module 202 includes a first obtaining sub-module 2021 and a first determining sub-module 2022.

The first obtaining sub-module 2021 is configured to obtain angular displacement data of the angular speed sensor. The first determining sub-module 2022 is configured to determine the angular displacement data as the displacement of the terminal.

The first obtaining sub-module 2021 can record a time point at which the to-be-processed picture is taken and a time point at which the reference picture is taken, and obtain angular displacement data of the angular speed sensor generated between the two time points. The first determining sub-module 2022 determines the angular displacement data as the displacement of the terminal.

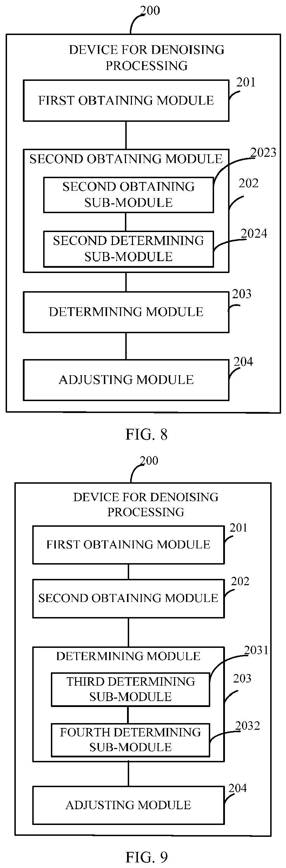

In some examples, the terminal includes an acceleration sensor (also referred to as a gravity sensor). The acceleration sensor can be used to measure a displacement. As illustrated in FIG. 8, the second obtaining module 202 include a second obtaining sub-module 2023 and a second determining sub-module 2024.

The second obtaining sub-module 2023 is configured to obtain displacement data of the acceleration sensor. The second determining sub-module 2024 is configured to determine the displacement data as the displacement of the terminal.

The second obtaining sub-module 2023 can record the time point at which the to-be-processed picture is taken and the time point at which the reference picture is taken, and then obtain the displacement data of the acceleration sensor generated between the two time points. The second determining sub-module 2024 determines the displacement data as the displacement of the terminal.

In some examples, the second obtaining module 202 can obtain, via the angular speed sensor and the acceleration sensor, the displacement of the terminal generated within the period in which the to-be-processed picture and the reference picture are taken.

The determining module 203 is configured to determine, according to the displacement, reference pixel points of the reference picture each corresponding to one of to-be-processed pixel points of the to-be-processed picture.

When the device 200 for denoising processing performs a processing on the to-be-processed picture, pixel points of the to-be-processed picture are processed sequentially. The pixel points of the to-be-processed picture are the to-be-processed pixel points. Pixel points of the reference picture are the reference pixel points.

After the second obtaining module 202 obtains the displacement of the terminal generated within the period in which the to-be-processed picture and the reference picture are taken, the determining module 203 determines, according to the displacement, the reference points of the reference picture each corresponding to one of the to-be-processed pixels of the to-be-processed picture.

In some examples, as illustrated in FIG. 9, the determining module 203 includes a third determining sub-module 2031 and a fourth determining sub-module 2032.

The third determining sub-module 2031 is configured to determine, according to the displacement, a horizontal sub-displacement and a vertical sub-displacement of an imaging plane of photographing performed by the terminal. The fourth determining sub-module 2032 is configured to determine, according to the horizontal sub-displacement and the vertical sub-displacement, the reference pixel points of the reference picture each corresponding to one of the to-be-processed pixel points of the to-be-processed picture.

After the second obtaining module 202 determines the displacement generated during photographing, the third determining sub-module 2031 can determine, according to the displacement, the horizontal sub-displacement and the vertical sub-displacement of the imaging plane of photographing performed by the terminal.

The horizontal sub-displacement and the vertical sub-displacement are displacements of the imaging plane of photographing performed by the terminal, and also a horizontal sub-displacement and a vertical sub-displacement of each pixel point of the reference picture relative to a corresponding pixel point of the to-be-processed picture, respectively. After the third determining sub-module 2031 determines the horizontal sub-displacement and the vertical sub-displacement, the fourth determining sub-module 2032 determines, according to the horizontal sub-displacement and the vertical sub-displacement, the reference pixel points of the reference picture each corresponding to one of the to-be-processed pixel points of the to-be-processed picture.

In some examples, the fourth determining sub-module 2032 is configured to determine, according to the horizontal sub-displacement and the vertical sub-displacement, a horizontal pixel point offset value and a vertical pixel point offset value of each to-be-processed pixel point of the to-be-processed picture, and determine, according to the horizontal pixel point offset value and the vertical pixel point offset value, the reference points of the reference picture each corresponding to one of the to-be-processed pixel points.

The camera of the terminal has a fixed specification, that is, a distance between two adjacent and smallest sensing units of the camera (pixel points of the camera) is fixed. For example, two adjacent pixel points of the camera is 0.1 µm.

After the third determining sub-module 2031 determines the horizontal sub-displacement and the vertical sub-displacement, the fourth determining sub-module 2032 calculates, according to the horizontal sub-displacement and the vertical sub-displacement, the horizontal pixel point offset value and the vertical pixel point offset value of each to-be-processed pixel point of the to-be-processed picture. For example, if the horizontal sub-displacement is 5µm and the vertical sub-displacement is 2µm, it can be determined that during photographing, the horizontal pixel point offset value and the vertical pixel point offset value of each to-be-processed pixel point of the to-be-processed picture are respectively 50 pixel points and 20 pixel points.

Thereafter, the fourth determining sub-module 2032 determines, according to the horizontal pixel point offset value and the vertical pixel point offset value of each to-be-processed pixel point, the reference pixel points of the reference picture each corresponding to one of the to-be-processed pixel points of the to-be-processed picture. For example, a reference pixel point corresponding to a to-be-processed pixel point of the to-be-processed picture can be obtained by horizontally moving 50 pixel points from the to-be-processed pixel point and then vertically moving 20 pixel points.

The adjusting module 204 is configured to adjust a pixel value of a corresponding to-be-processed pixel point according to a pixel value of each of the reference pixel points.

After the determining module 203 determines the reference pixel points of the reference picture each corresponding to one of the to-be-processed pixel points of the to-be-processed picture, the adjusting module 204 adjusts a pixel value of a corresponding to-be-processed pixel point according to a pixel value of each of the reference pixel points, so as to reduce noise in the to-be-processed picture.

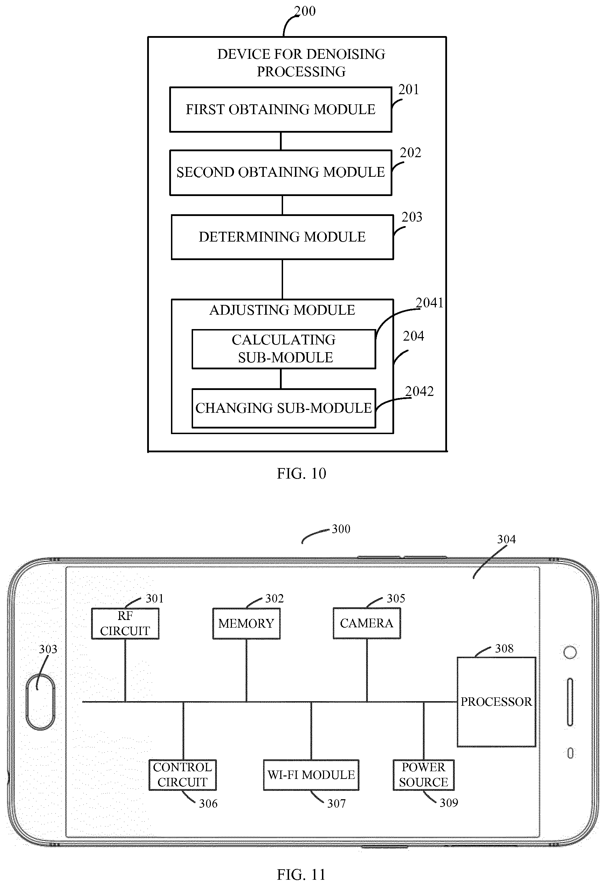

In some examples, as illustrated in FIG. 10, the adjusting module 204 includes a calculating sub-module 2041 and a changing sub-module 2042.

The calculating sub-module 2041 is configured to determine a target pixel value according to a pixel value of each of the to-be-processed pixel points, a pixel value of a corresponding reference pixel point, a predetermined weight for the each of the to-be-processed pixel points, and a predetermined weight for the corresponding reference pixel point. The changing sub-module 2042 is configured to change the pixel value of the each of the to-be-processed pixel points to the target pixel value.

The calculating sub-module 2041 can calculate the target pixel value according to the pixel value of the each of the to-be-processed pixel points, the pixel value of the corresponding reference pixel point, the predetermined weight for the each of the to-be-processed pixel points, and the predetermined weight for the corresponding reference pixel point. For example, if the pixel value of the each of the to-be-processed pixel points is 120, the pixel value of the corresponding reference pixel point is 100, the predetermined weight for the each of the to-be-processed pixel points is 0.7, and the predetermined weight for the corresponding reference pixel point is 0.3, it can be calculated that the target pixel value W is 114 via an equation W=120×0.7+100×0.3. Thereafter, the changing sub-module 2042 changes the pixel value of the each of the to-be-processed pixel points to the target pixel value.

In some examples, the calculating sub-module 2041 is configured to calculate an average pixel value of the pixel value of the each of the to-be-processed pixel points and the pixel value of the corresponding reference pixel point, and determine the average pixel value as the target pixel value.

The predetermined weight for the each of the to-be-processed pixel point and the predetermined weight for the corresponding reference pixel point are both 0.5. The calculating sub-module 2041 calculates the average pixel value of the pixel value of the each of the to-be-processed pixel points and the pixel value of the corresponding reference pixel point, and then determines the average pixel value as the target pixel value. For example, if the pixel value of the each of the to-be-processed pixel points is 120, and the pixel value of the corresponding reference pixel point is 100, then it can be calculated that the average pixel value is 110, and then the target pixel value is determined to be 110.

In detailed implementations, the various modules described above can be implemented as independent entities, and also can be combined arbitrarily to be implemented as a same entity or several entities.

Based on the above, it can be concluded that for the device 200 for denoising processing provided in the implementation of the present disclosure, the first obtaining module 201 obtains the to-be-processed picture and the reference picture from multiple pictures continuously taken. The second obtaining module 202 obtains the displacement of the terminal generated within the period in which the to-be-processed picture and the reference picture are taken. According to the displacement, the determining module 203 determines the reference pixel points of the reference picture each corresponding to one of the to-be-processed pixel points of the to-be-processed picture. The adjusting module 204 adjusts, according to a pixel value of each of the reference pixel points, a pixel value of a corresponding to-be-processed pixel point. In the solution, according to the displacement of the terminal generated during photographing of the terminal, the reference pixel points each corresponding to one of the to-be-processed pixel points of the to-be-processed picture are determined. Thereafter, the pixel values of the to-be-processed pixel points are adjusted according to the pixel values of the reference pixel points. Thus, noise in the picture can be reduced, and accordingly the quality of the picture is improved.

Implementations of the present disclosure further provides a terminal. As illustrated in FIG. 11, a terminal 300 includes a radio frequency (RF) circuit 301, a memory 302 including one or more computer-readable storage mediums, an input unit 303, a display unit 304, a camera 305, a control circuit 306, a wireless fidelity (Wi-Fi) module 307, a processor 308 including one or more processing cores, a power source 309, and the like. Those skilled in the art can understand that the structure of the terminal illustrated in FIG. 11 does not constitute any limitation on the terminal. The terminal may include more or fewer components than illustrated, a combination of some components, or different component arrangements.

The RF circuit 301 is configured to communicate with network devices or other electronic devices via wireless networks, and configured to complete information reception and transmission between the terminal and the network devices or between the terminal and the other electronic devices.

The memory 302 is configured to store application programs and data. The application programs stored in the memory 302 contain executable program codes. The application programs can form various functional modules. The processor 308 is configured to execute various function applications and data processing by running the application programs stored in the memory 302.

The input unit 303 may be configured to receive input digital or user's feature information (for example, fingerprint). In an example, the input unit 303 may include a fingerprint recognition module and a touch screen. The fingerprint recognition module is configured to collect data of user's fingerprint thereon. The touch screen is configured to receive a user's touch operation.

The display unit 304 is configured to display information input in response to the user's operation or information provided for the user or various graphical user interface of the terminal. The graphical user interface may be consisted of graphics, texts, icons, videos, or any combination thereof.

The terminal may further include one or more cameras 305. For example, the terminal may include a front camera and a rear camera. The camera 305 can be configured to take pictures.

The control circuit 306 may be electrically coupled to the camera 305, so as to control the camera 305 to take pictures or adjust parameters of the camera 305.

Wi-Fi belongs to a short-distance wireless transmission technology. With aid of the Wi-Fi module 307, the terminal can communicate with other terminals or servers.

The processor 308 is the control center of the mobile phone. The processor 308 is coupled to various parts of the whole terminal through various interfaces and lines, runs or executes application programs stored in the memory 302 and invokes data stored in the memory 302 to perform various functions of the terminal and process data, thereby monitoring the terminal as a whole.

The terminal may also include a power supply 309 (e.g., a battery) that supplies power to various components. For example, the power supply may be logically connected to the processor 308 via a power management system to realize management of charging, discharging, and power consumption through the power management system.

Although not illustrated in FIG. 11, the terminal may further include a near field communication (NFC) module, a Bluetooth module, and so on, and details are not repeated herein.

In the implementations, the processor 308 of the terminal can load, according to following instructions, executable program codes corresponding to one or more programs to the memory 302. The processor 308 runs the programs stored in the memory 302 to realize various functions. A to-be-processed picture and a reference picture are obtained from multiple pictures taken continuously. A displacement of the terminal generated within a period in which the to-be-processed picture and the reference picture are taken is obtained. According to the displacement, reference pixel points of the reference picture each corresponding to one of to-be-processed pixel points of the to-be-processed picture are determined. According to a pixel value of each of the reference pixel points, a pixel value of a corresponding to-be-processed pixel point is adjusted.

In some examples, the terminal includes an angular speed sensor. The processor 308 configured to obtain the displacement generated within the period in which the to-be-process picture and the reference picture are taken is configured to obtain angular displacement data of the angular velocity sensor, and determine the angular displacement data as the displacement of the terminal.

In some examples, the terminal includes an acceleration sensor. The processor 308 configured to obtain the displacement generated within the period in which the to-be-process picture and the reference picture are taken is configured to obtain displacement data of the acceleration sensor, and determine the displacement data as the displacement of the terminal.

In some examples, the processor 308 configured to determine, according to the displacement, the reference pixel points of the reference picture each corresponding to one of the to-be-processed pixel points of the to-be-processed picture is configured to determine, according to the displacement, a horizontal sub-displacement and a vertical sub-displacement of an imaging plane of photographing performed by the terminal, and determine, according to the horizontal sub-displacement and the vertical sub-displacement, the reference pixel points of the reference picture each corresponding to one of the to-be-processed pixel points of the to-be-processed picture.

In some examples, the processor 308 configured to determine, according to the displacement, the reference pixel points of the reference picture each corresponding to one of the to-be-processed pixel points of the to-be-processed picture is configured to determine, according to the horizontal sub-displacement and the vertical sub-displacement, a horizontal pixel point offset value and a vertical pixel point offset value of each of the to-be-processed pixel points of the to-be-processed picture, and determine, according to the horizontal pixel point offset value and the vertical pixel point offset value, the reference pixel points of the reference picture each corresponding to one of the to-be-processed pixel points of the to-be-processed picture.

In some examples, the processor 308 configured to adjust, according to the pixel value of each of the reference pixel points, the pixel value of the corresponding to-be-processed pixel point is configured to determine a target pixel value according to a pixel value of each of the to-be-processed pixel points, a pixel value of a corresponding reference pixel point, a predetermined weight for the each of the to-be-processed pixel points, and a predetermined weight for the corresponding reference pixel point, and change the pixel value of the each of the to-be-processed pixel points to the target pixel value.

In some examples, the processor 308 configured to determine the target pixel value according to the pixel value of the each of the to-be-processed pixel points, the pixel value of the corresponding reference pixel point, the predetermined weight for the each of the to-be-processed pixel points, and the predetermined weight for the corresponding reference pixel point is configured to calculate an average pixel value of the pixel value of the each of the to-be-processed pixels and the pixel value of the corresponding reference pixel point, and determine the average pixel value as the target pixel value.

For the above implementations, each implementation has its own emphasis. For some parts not described in detail in some implementations, reference can be made to the method for denoising processing described in detail, and details are not repeated herein.

Based on the above, it can be concluded that for the terminal provided in the implementation of the present disclosure, the to-be-processed picture and the reference picture are obtained from multiple pictures continuously taken. The displacement of the terminal generated within the period in which the to-be-processed picture and the reference picture are taken is obtained. According to the displacement, the reference pixel points of the reference picture each corresponding to one of the to-be-processed pixel points of the to-be-processed picture are determined. According to a pixel value of each of the reference pixel points, a pixel value of a corresponding to-be-processed pixel points is adjusted. In the solution, according to the displacement of the terminal generated during photographing of the terminal, the reference pixel points each corresponding to one of the to-be-processed pixel points of the to-be-processed picture are determined. Thereafter, the pixel values of the to-be-processed pixel points are adjusted according to the pixel values of the reference pixel points. Thus, noise in the picture can be reduced, and accordingly the quality of the picture is improved.

Implementations of the present disclosure further provide a storage medium. The storage medium stores a number of instructions. The instructions are invoked by a processor to implement the method for denoising described in any of the above implementations.

It will be understood by those ordinarily skilled in the art that all or a part of operations of the various methods of the implementations described above may be accomplished by means of a program to instruct associated hardware. The program may be stored in a computer-readable memory, which may include, but is not limited to, a read only memory (ROM), a random access memory (RAM), a disk or a CD, and so on.

The above illustrates the method and device for denoising processing, a storage medium, and a terminal provided in the implementations of the present disclosure in detail. The specification employs specific examples to illustrate the principle and implementation manners of the present disclosure. The illustration of the above implementations is just used to help in understanding of the method and core concept of the present disclosure. For a person ordinarily skilled in the art, according to the concept of the present disclosure, changes may be made on the specific implementations and application range. In conclusion, the content of the specification shall not be understood to limit the present disclosure.

## Claims

1. A method for denoising processing, comprising:
obtaining a to-be-processed picture and a reference picture from a plurality of pictures taken continuously;
obtaining a displacement of a terminal generated within a period in which the to-be-processed picture and the reference picture are taken;
determining, according to the displacement, reference pixel points of the reference picture each corresponding to one of to-be-processed pixel points of the to-be-processed picture; and
adjusting, according to a pixel value of each of the reference pixel points, a pixel value of a corresponding to-be-processed pixel point.

2. The method of claim 1, wherein the terminal comprises an angular velocity sensor;
obtaining the displacement of the terminal generated within the period in which the to-be-processed picture and the reference picture are taken comprises:
obtaining angular displacement data of the angular velocity sensor; and
determining the angular displacement data as the displacement of the terminal.

3. The method of claim 1, wherein the terminal comprises an acceleration sensor;
obtaining the displacement of the terminal generated within the period in which the to-be-processed picture and the reference picture are taken comprises:
obtaining displacement data of the acceleration sensor; and
determining the displacement data as the displacement of the terminal.

4. The method of claim 1, wherein determining, according to the displacement, the reference pixel points of the reference picture each corresponding to one of the to-be-processed pixel points of the to-be-processed picture comprises:
determining, according to the displacement, a horizontal sub-displacement and a vertical sub-displacement of an imaging plane of photographing performed by the terminal; and
determining, according to the horizontal sub-displacement and the vertical sub-displacement, the reference pixel points of the reference picture each corresponding to one of the to-be-processed pixel points of the to-be-processed picture.

5. The method of claim 4, wherein determining, according to the horizontal sub-displacement and the vertical sub-displacement, the reference pixel points of the reference picture each corresponding to one of the to-be-processed pixel points of the to-be-processed picture comprises:
determining, according to the horizontal sub-displacement and the vertical sub-displacement, a horizontal pixel point offset value and a vertical pixel point offset value of each of the to-be-processed pixel points of the to-be-processed picture; and
determining, according to the horizontal pixel point offset value and the vertical pixel point offset value, the reference pixel points of the reference picture each corresponding to one of the to-be-processed pixel points of the to-be-processed picture.

6. The method of claim 1, wherein adjusting, according to the pixel value of each of the reference pixel points, the pixel value of the corresponding to-be-processed pixel point comprises:
calculating a target pixel value according to a pixel value of each of the to-be-processed pixel points, a pixel value of a corresponding reference pixel point, a predetermined weight for the each of the to-be-processed pixel points, and a predetermined weight for the corresponding reference pixel point; and
changing the pixel value of the each of the to-be-processed pixel points to the target pixel value.

7. The method of claim 6, wherein calculating the target pixel value according to the pixel value of the each of the to-be-processed pixel points, the pixel value of the corresponding reference pixel point, the predetermined weight for the each of the to-be-processed pixel points, and the predetermined weight for the corresponding reference pixel point comprises:
calculating an average pixel value of the pixel value of the each of the to-be-processed pixels and the pixel value of the corresponding reference pixel point; and
determining the average pixel value as the target pixel value.

8. A device for denosing process, comprising:
a first obtaining module configured to obtain a to-be-processed picture and a reference picture from a plurality of pictures taken continuously;
a second obtaining module configured to obtain a displacement of a terminal generated within a period in which the to-be-processed picture and the reference picture are taken;
a determining module configured to determine, according to the displacement, reference pixel points of the reference picture each corresponding to one of to-be-processed pixel points of the to-be-processed picture; and
an adjusting module configured to adjust, according to a pixel value of each of the reference pixel points, a pixel value of a corresponding to-be-processed pixel point.

9. The device of claim 8, wherein the terminal comprises an angular velocity sensor;
the second obtaining module comprises:
a first obtaining sub-module configured to obtain angular displacement data of the angular velocity sensor; and
a first determining sub-module configured to determine the angular displacement data as the displacement of the terminal.

10. The device of claim 8, wherein the terminal comprises an acceleration sensor;
the second obtaining module comprises:
a second obtaining sub-module configured to obtain displacement data of the acceleration sensor; and
a second determining sub-module configured to determine the displacement data as the displacement of the terminal.

11. The device of claim 8, wherein the determining module comprises:
a third determining sub-module configured to determine, according to the displacement, a horizontal sub-displacement and a vertical sub-displacement of an imaging plane of photographing performed by the terminal; and
a fourth determining sub-module configured to determine, according to the horizontal sub-displacement and the vertical sub-displacement, the reference pixel points of the reference picture each corresponding to one of the to-be-processed pixel points of the to-be-processed picture.

12. The device of claim 8, wherein the adjusting module comprises:
a calculating sub-module configured to determine a target pixel value according to a pixel value of each of the to-be-processed pixel points, a pixel value of a corresponding reference pixel point, a predetermined weight for the each of the to-be-processed pixel points, and a predetermined weight for the corresponding reference pixel point; and
a changing sub-module configured to change the pixel value of the each of the to-be-processed pixel points to the target pixel value.

13. A storage medium storing a plurality of instructions, the instructions being invoked by a processor to perform the method for denoising processing of any of claims 1 to 7.

14. A terminal comprising:
a processor;
a camera; and
a control circuit;
the processor being electrically coupled to the camera and the control circuit;
the control circuit being configured to control the camera to take photos; and
the processor being configured to:
obtain a to-be-processed picture and a reference picture from a plurality of pictures taken continuously;
obtain a displacement of the terminal generated within a period in which the to-be-processed picture and the reference picture are taken;
determine, according to the displacement, reference pixel points of the reference picture each corresponding to one of to-be-processed pixel points of the to-be-processed picture; and
adjust, according to a pixel value of each of the reference pixel points, a pixel value of a corresponding to-be-processed pixel point.

15. The terminal of claim 14, wherein the terminal comprises an angular velocity sensor;
the processor configured to obtain the displacement of the terminal generated within the period in which the to-be-processed picture and the reference picture are taken is configured to:
obtain angular displacement data of the angular velocity sensor; and
determine the angular displacement data as the displacement of the terminal.

16. The terminal of claim 14, wherein the terminal comprises an acceleration sensor;
the processor configured to obtain the displacement of the terminal generated within the period in which the to-be-processed picture and the reference picture are taken is configured to:
obtain displacement data of the acceleration sensor; and
determine the displacement data as the displacement of the terminal.

17. The terminal of claim 14, wherein the processor configured to determine, according to the displacement, the reference pixel points of the reference picture each corresponding to one of the to-be-processed pixel points of the to-be-processed picture is configured to:
determine, according to the displacement, a horizontal sub-displacement and a vertical sub-displacement of an imaging plane of photographing performed by the terminal; and
determine, according to the horizontal sub-displacement and the vertical sub-displacement, the reference pixel points of the reference picture each corresponding to one of the to-be-processed pixel points of the to-be-processed picture.

18. The terminal of claim 17, wherein the processor configured to determine, according to the horizontal sub-displacement and the vertical sub-displacement, the reference pixel points of the reference picture each corresponding to one of the to-be-processed pixel points of the to-be-processed picture is configured to:
determine, according to the horizontal sub-displacement and the vertical sub-displacement, a horizontal pixel point offset value and a vertical pixel point offset value of each of the to-be-processed pixel points of the to-be-processed picture; and
determine, according to the horizontal pixel point offset value and the vertical pixel point offset value, the reference pixel points of the reference picture each corresponding to one of the to-be-processed pixel points of the to-be-processed picture.

19. The terminal of claim 14, wherein the processor configured to adjust, according to the pixel value of each of the reference pixel points, the pixel value of the corresponding to-be-processed pixel point is configured to:
calculate a target pixel value according to a pixel value of each of the to-be-processed pixel points, a pixel value of a corresponding reference pixel point, a predetermined weight for the each of the to-be-processed pixel points, and a predetermined weight for the corresponding reference pixel point; and
change the pixel value of the each of the to-be-processed pixel points to the target pixel value.

20. The terminal of claim 19, wherein the processor configured to calculate the target pixel value according to the pixel value of the each of the to-be-processed pixel points, the pixel value of the corresponding reference pixel point, the predetermined weight for the each of the to-be-processed pixel points, and the predetermined weight for the corresponding reference pixel point is configured to:
calculate an average pixel value of the pixel value of the each of the to-be-processed pixels and the pixel value of the corresponding reference pixel point; and
determine the average pixel value as the target pixel value.
